# EUROPEAN PATENT SPECIFICATION

(11) **EP 0 755 313 B1**
(45) Date of publication and mention of the grant of the patent: **14.07.1999**
(21) Application number: 95913665.6
(22) Date of filing: 09.03.1995
(51) Int. Cl.: B23D 51/10, B23B 31/22

(54) **TOOLLESS QUICKCHANGE BLADE CLAMP FOR RECIPROCATING SAWS**
SCHNELLWECHSELSÄGEBLATTSPANNVORRICHTUNG, BEDIENBAR OHNE ZUSÄTZLICHES WERKZEUG, FÜR HIN- UND HERGEHENDE SÄGEN
SYSTEME DE CHANGEMENT RAPIDE SANS OUTIL D'UNE LAME DE SCIE SAUTEUSE

(30) Priority: 12.04.1994 US 226780
(43) Date of publication of application: 29.01.1997
(73) Proprietor: PORTER CABLE CORPORATION, Jackson, TN 38302 (US); Phillips, Alan G., Jackson, TN 38305 (US); Popik, Matthew G., Jackson, TN 38305 (US)
(72) Inventor: PHILLIPS, Alan, G., Jackson, TN 38305 (US); POPIK, Matthew, G., Jackson, TN 38305 (US)
(74) Representative: Johnstone, Helen Margaret
(86) International application number: US9503120
(87) International publication number: WO9527583

(56) References cited:
- DE-U- 9 305 188
- US-A- 3 583 716
- US-A- 3 823 473

## Description

### BACKGROUND OF THE INVENTION

The present invention relates to reciprocating power saws and more specifically to a clamping system that permits the quick and easy removal and replacement of the blade according to the precharacterising portion of claim 1 and 2 respectively. An inherent problem with reciprocating saws is that the blade of the saw quickly becomes dull and/or breaks requiring frequent blade changes. Prior art blade assemblies typically require a tool, such as a screwdriver or Allen wrench to change the blade. This is a slow and at times difficult process. Moreover, at times the required tool may not be available having been misplaced or lost. To address these problems a number of prior art designs use a blade clamp which does not require a tool.

For example, U.S. Patent 3,583,716 discloses one such tool-less assembly for attaching and locking the saw blade in place. The shank of the saw blade is received within a slot in a saw bar which is driven by a motor. An aperture is provided in the shank of the blade. An aperture is likewise provided in the saw bar in communication with the slot receiving the blade shank. A ball is mounted in and freely removable within the aperture in the saw bar. A collar is mounted on the saw bar and is freely rotatable about the saw bar. The collar has an eccentrically grooved surface functioning as a cam surface engaging the ball. When the blade is inserted into the saw bar the collar is rotated to shift the ball to contact the aperture in the shank of the blade. In this position the blade is locked in place until the collar is rotated to an unlocked position. In order to stabilize the blade within the saw bar a pin is provided in the saw bar extending into the longitudinal slot. The shank of the saw blade is provided with a notch or recess which receives the pin seating the saw blade within the saw bar.

US-A-3823473 represents the closest prior art and discloses a tool-less attachment means for a saber saw describing several embodiments of an attachment assembly where pins or balls engage the shank of a blade to secure the blade in place.

U.S. Patent 3,927,893 also discloses an assembly adapted to engage the blade of a reciprocating tool and secure the blade in position. This apparatus includes a ball which is selectively engaged with a recess or dimple in a blade to seat the blade firmly in the assembly.

While these prior art patents describe a blade clamp assembly which does not require the use of a tool, each requires the use of a blade with a shank specifically designed for the patented structure. For example, in U.S. Patent 3,583,716 the shank of the blade is provided with a notch that engages a pin in the tool bar to seat and stabilize the saw in the saw bar. Manufacturers of blades for reciprocating saws have standardized the width and length of the shank of the blade and the position of the aperture or hole in the shank. It is desirable for the power saw to accept blades having the standardized dimensions and configurations. The user of the saw is thus not limited in his ability to obtain acceptable replacement blades.

Thus, the design of the present invention was developed to provide a tool-less clamp assembly for a reciprocating saw which does not require a unique shank design but, on the other hand, will accept the standardized and universal shank design of many blade manufacturers.

In addition the attachment means for the saw blade must stabilize the blade and prevent movement of the blade when it is locked in the operative position. The prior art discloses a number of different such stabilization means. As mentioned, U.S. Patent 3,583,716, for example, discloses a pin that is received in a recess in the shank of the blade. U.S. Patent 5,103,565 discloses in one embodiment a blade holder for receiving a universal type blade where a pin is designed to engage a radiused surface on the shank. Despite the fact that such universal blades are standard in many respects, one cannot always rely upon the radiused surface engaged by the pin of the '565 patent to be in a standard location. It can be seen that these prior art patents disclose additional mechanical elements such as pins in order to stabilize the saw blade.

Accordingly, the present invention is also directed toward a clamp assembly which will affect blade stabilization without complex and unnecessary hardware designs.

### SUMMARY OF THE INVENTION

The present invention as defined in claim 1 and 2 respectively is the combination in a reciprocating power saw of a blade carrier that is driven by a motor and which has a free end with a slot along its central longitudinal axis for receiving the shank portion of a saw blade wherein the shank portion has an aperture. The free end of the blade carrier further has an aperture in its sidewall that provides communication between the outer surface of the free end and the blade receiving slot. A clamp member comprising a tubular body and a hollow interior is mounted on the free end of the blade carrier. The inner surface of the clamp member has an eccentric groove. In the preferred embodiment the clamp member has a length measured along its longitudinal central axis that is at least equivalent to the length of the shank portion of the blade. The inner diameter of the clamp member is substantially equivalent to the width of the shank portion of the blade. The clamp member is attached to the blade carrier for rotation between first and second positions. It has a means captured in the aperture of the free end of the blade carrier and in engagement with the eccentric groove in the clamp member for cooperating with the aperture in the shank portion to secure the saw blade to the blade carrier when the clamp member is in a first position. When the clamp member is rotated to a second position the saw blade is released for removal.

In a preferred embodiment a ball is mounted within the aperture in the sidewall of the blade carrier and is freely movable within the aperture. The eccentric groove in the inner surface of the clamp member functions as a camming surface forcing the ball to engage the aperture in the shank portion of the blade in the first position of the clamp member. A torsion spring is attached to the blade carrier and the clamp member to bias the clamp member toward its first or locking position.

The present invention thus incorporates a tool-less clamp assembly that will accept a saw blade of universal and standardized design. The clamp assembly is dimensioned and constructed so that in the locked position the blade is stabilized eliminating the need for incorporating stabilizing hardware into the clamp. These and other advantages of the present invention will become apparent with reference to the accompanying drawings, detailed description of the preferred embodiment and claims.

### BRIEF DESCRIPTION OF THE DRAWINGS

FIGURE 1 is an exploded view in perspective illustrating a preferred embodiment of the present invention;
FIGURE 2 is a view in cross section taken along lines 2-2 of Fig. 1;
FIGURES 3A-3D are elevational and sectional drawings of the collar of the embodiment of the invention of Figs. 1-2;
FIGURE 4 is a view in cross section similar to Fig. 2 but showing an alternative embodiment of the present invention;
FIGURES 5A-D are elevational and sectional drawings of the collar of the embodiment of the invention of Fig. 4;
FIGURE 6 is a plan view of an alternative structure of the collar of the embodiment of Figs. 1-2.

### DETAILED DESCRIPTION OF THE PREFERRED EMBODIMENT

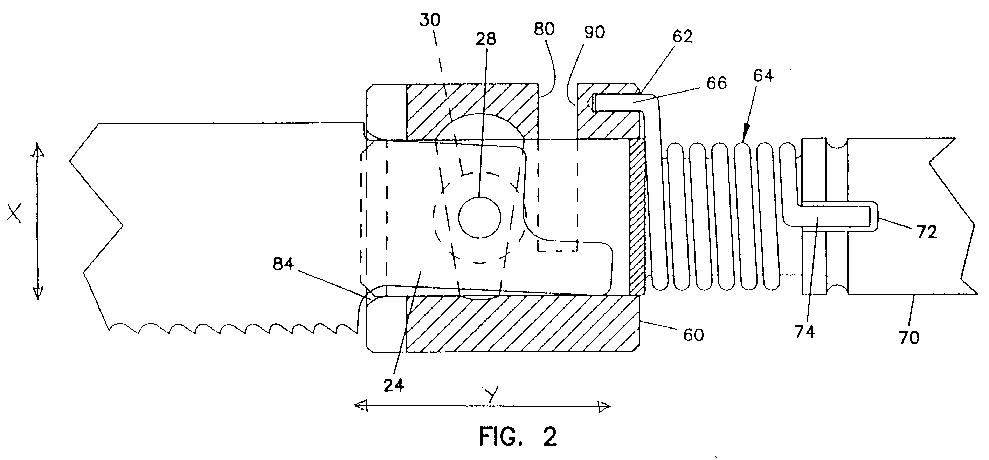

Referring to the drawings, wherein like numerals represent like parts throughout the several views, there is illustrated a blade carrier 10 having a free end 12 and an end 14 which is operatively connected to a motor (not shown) of a power saw to impart reciprocating motion to blade carrier 10 along its central longitudinal axis as shown at 16. Free end 12 has a cylindrical head 18 and an outer surface 20. Head 18 has a slot 22 disposed therein along longitudinal axis 16. Slot 22 is adapted to receive a shank member 24 of a saw blade 26. Shank member 24 is a standardized or universal design adapted for use with any conventional reciprocating power saw. Thus, as shown more specifically in Fig. 2 shank member 24 has a standardized width as indicated at X and a standardized length as indicated at Y. Disposed at a standardized location on shank member 24 is an aperture 28.

Cylindrical head 18 has an aperture 30 providing communication between outer surface 20 and slot 22. Head 18 is provided with a second aperture 32 also providing communication between outer surface 20 and slot 22. A ball 34 is received within aperture 30 and has a diameter selected such that ball 34 will move freely within aperture 30 as will be described in more detail hereafter. A pin having a diameter selected such that it will freely move within aperture 30 and having rounded ends may also be used in lieu of ball 34. Aperture 32 is adapted to receive a stop pin 36. In one embodiment pin 36 may be a roll or spring pin and aperture 32 may be a smooth bore in which the spring pin is received. In an alternative embodiment second aperture 32 may be threaded and pin 36 may be provided with external threads that mate with the threads of aperture 32.

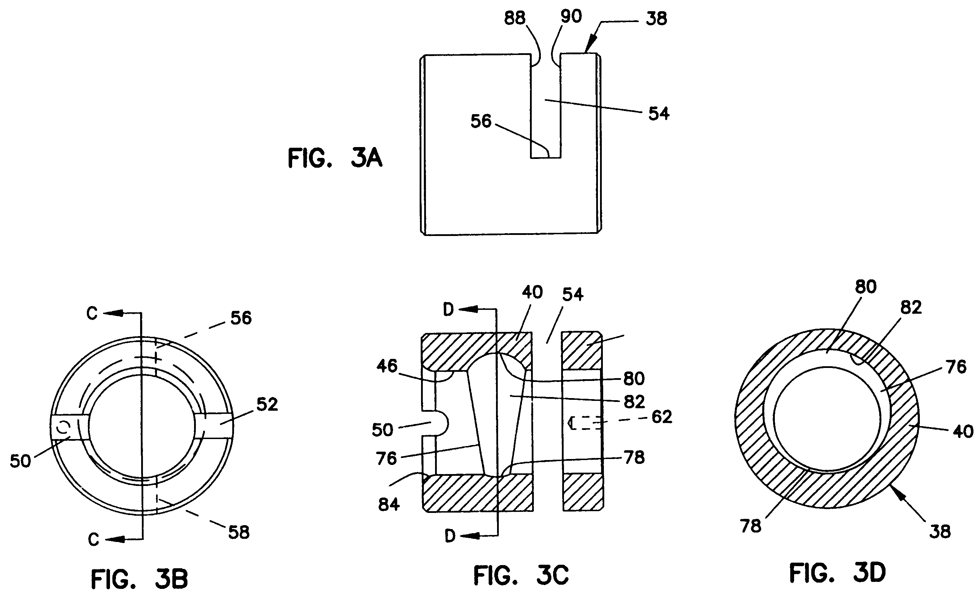

A clamp collar 38 is mounted on cylindrical head 18. Clamp collar 38 has a tubular body member 40 with a hollow interior 42, an outer surface 44 and an inner surface 46. Body member 40 has an inner diameter selected to be only slightly greater than the width X of shank member 24. Body member 40 has an outer end 48 and a pair of notches 50 and 52 spaced 180 degrees from each other about the circumference of outer end 48. In one embodiment of the present invention body member 40 has a slot 54 providing an opening between outer surface 44 and inner surface 46. Slot 54 extends partially about the circumference of body member 40. Slot 54 defines a pair of stop surfaces 56 and 58 the purpose of which will be described in more detail hereafter. Turning specifically to Figs. 2 and 3, body member 40 has an inner end 60 having a recess at 62. A torsion spring 64 has a first end 66 which is received within recess 62. Torsion spring 64 is coiled about a section 68 of blade carrier 10. A section 70 of blade carrier 10 is provided with a recess 72 in which is received an end 74 of torsion spring 64.

Torsion spring 64 biases clamp collar 38 toward a first position corresponding to blade 26 being locked in carrier 10. Fig. 3 illustrates the structure of clamp collar 38 in more detail. Inner surface 46 of tubular member 40 is provided with an eccentric circumferential groove 76 shown specifically in Figs. 3c and 3d. Groove 76 varies in depth from a minimum at 78 to a maximum at 80. Groove 76 defines a camming surface 82.

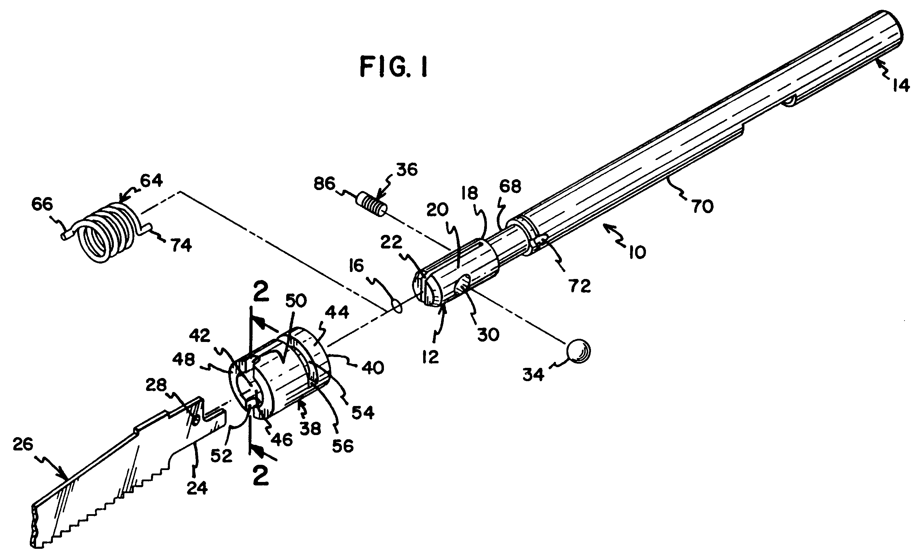

The operation of the present invention will now be described with reference to the embodiment of Figs. 1-3. As stated previously ball 34 is received within aperture 30 and freely movable within aperture 30. Ball 34 is captured in eccentric groove 76 as clamp collar 38 rotates about cylindrical head 18. Ball 34 under the influence of camming surface 82 is urged inward toward central axis 16 to the first or locked position of collar 38 and allowed to move outward or away from axis 16 toward a second or unlocked position of collar 38. In the first or locked position ball 34 seats at least partially in aperture 28 of shank member 24 to secure blade 26. When collar 38 is rotated to its second position ball 34 is disengaged from aperture 28 allowing blade 26 to be removed. By positively biasing clamp collar 38 toward the first or locked position there is no loosening of blade 26 due to vibration during operation of the saw. On the other hand the positive biasing force of torsion spring 64 toward the locked position tightens clamp collar 38 with vibration. Aperture 30 and ball 34 are positioned with respect to outer end 48 of clamp collar 38 so that blade 26 is restrained from pivoting about ball 34. This is accomplished by locating aperture 30 and ball 34 on cylindrical head 18 in a position such that blade 26 will engage a radiused surface 84 upon minimal pivoting of blade 26.

Further by sizing clamp collar 38 such that its inside diameter is substantially equal to the width X of shank portion 24 and such that its length is at least as great as the length Y of shank portion 24, blade 26 is stabilized by the single ball 34 and collar 38 assembly. Pin 36 serves two functions. First, pin 36 is inserted into aperture 32 such that a portion of pin 36 projects outward from surface 20 of cylindrical head 18. Pin portion 86 rides within slot 54. When blade 26 is removed pin 36 retains collar 38 on cylindrical head 18 through the engagement of pin 36 with sidewalls 88 and 90 of slot 54. Upon rotation of collar 38, portion 86 of pin 36 will engage stop surfaces 56 and 58 to limit rotation of clamp collar 38 so that torsion spring 64 cannot be damaged by over-rotation in one direction and in the other direction to maintain a preloaded tension on clamp collar 38 when blade 26 is removed.

Notches 50 and 52 formed in outer end 48 provide a means to remove broken blade shanks. Notches 50 and 52 have a depth measured along central axis 16 that extends beyond where breaks usually occur in shank 24. A broken shank thus can be removed by aligning notches 50 and 52 with slot 22 and a replacement blade may be used to pry the broken shank from cylindrical head 18.

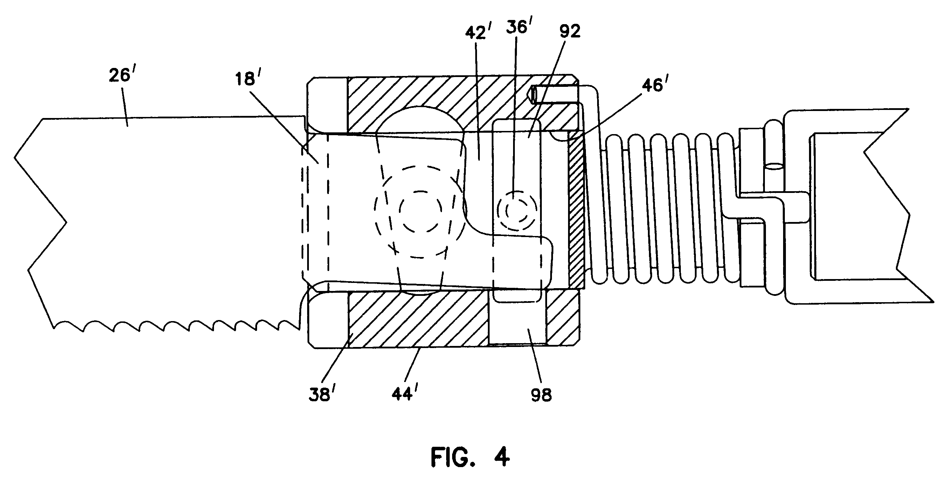

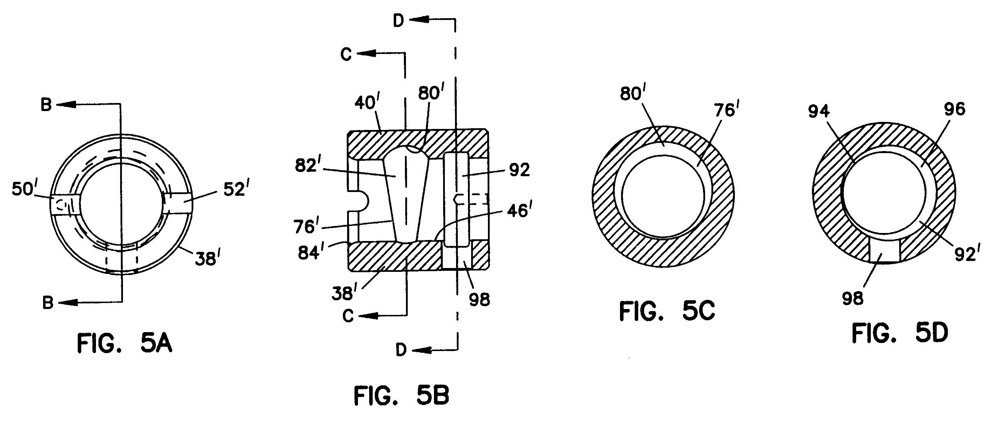

Figs. 4-5 illustrate an alternative embodiment of the present invention. Instead of slot 54 a second eccentric groove 92 is formed on inner surface 46'. Groove 92 extends about a portion of the circumference of clamp collar 38' as illustrated in Fig. 5D. Eccentric groove 92, like groove 76', also varies in depth from a minimum at 94 to a maximum at 96. Second eccentric groove 92 as shown in Figs. 5C and 5D is essentially 90 degrees out of phase with respect to eccentric groove 76'. In other words maximum depth 96 of groove 92 is positioned about central axis 16' 90 degrees from the location of maximum depth 80' of eccentric groove 76'. An aperture 98 is located in tubular body member 38' permitting communication between outer surface 44' and hollow interior 42'. Aperture 98 is located to provide access to cylindrical member 18' at the position of eccentric groove 92. In this embodiment set screw or roll pin 36' has a stop portion 86' projecting above the outer surface of cylindrical head 18'. Stop portion 86' is captured in eccentric groove 92. In this manner roll pin 36' functions to retain clamp collar 38' on cylindrical head 18' when blade 26' is removed. Pin 36' also cooperates with groove 92 to limit the rotation of clamp collar 38' as described above with references to Figs. 1-3.

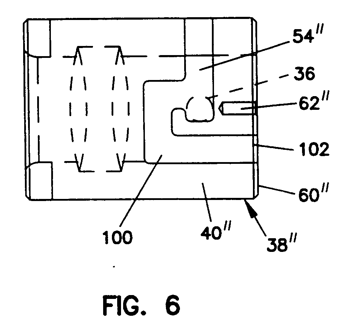

Fig. 6 illustrates an alternative embodiment of clamp collar 38 of Figs. 1-3. This embodiment clamp collar 38'' is the same in all respects to clamp collar 38 except for a modification of slot 54. In this embodiment slot 54'' is modified to allow for disassembly of the clamp mechanism by removal of clamp collar 38'' from cylindrical head 18. This would allow cleaning of the mechanism. Accordingly, an elbow slot extension 100 is provided in tubular body 40'' communicating with slot 54''. Slot extension 100 has an opening 102 at inner end 60''. For removal collar 38'' is rotated and forced against torsion spring 64 so that pin 36 enters groove 100. Pin 36 thus no longer is in engagement with slot 54'' allowing clamp collar 38'' to be removed with pin 36 travelling through opening 102. This structure is a conventional push and twist type connection known in other prior art applications.

It should be appreciated that the above disclosure is illustrative and changes may be made in detail, especially in matters of shape, size and arrangement of parts within the scope of the present invention as claimed.

From the above description it should be apparent that the present invention provides a quick and easy clamp assembly with minimum mechanical parts. By virtue of its unique design the clamp assembly functions with blades of universal and standardized configuration.

## Claims

1. A reciprocating power saw having a motor for driving a saw blade (26) having a shank portion (24) with an aperture (28) formed therein, the saw comprising:
a blade carrier (10) operatively connected to said motor and having a free end (12), said free end having a slot (22) formed therein along a central longitudinal axis thereof in which said shank portion of said saw blade is received, said free end further having an aperture (30) in its sidewall providing communication between an outer surface of said free end and said slot;
a clamp member (38) having tubular body (40) and a hollow interior (42) in which said free end of said blade carrier is received, said clamp member having a first eccentric groove (76) formed in its inner surface, said clamp member further having an inside diameter corresponding generally to the width (X) of said shank portion of said saw blade and further comprising a shank engaging surface engageable with a part of the shank spaced apart from the aperture, which shank engaging surface is curved;
means for attaching said clamp member to said free end of said blade carrier for rotation about said free end between at least first and second positions;
captured means (34) captured in said aperture in said free end of said blade carrier and in engagement with said first eccentric groove for cooperating with said aperture in said shank portion to secure said blade to said blade carrier when said clamp member is in said first position and release said blade when said clamp member is in said second position;
retaining means co-operable with the blade for retaining the clamp member at said free end and to limit rotation of said clamp member between said first and second positions; and
biasing means (64) attached to said blade carrier and to said clamp member for biasing said clamp member toward a first position wherein said means captured in said aperture is urged into engagement with said aperture in said shank portion of said blade to secure said blade carrier, said clamp member rotatable from said first position to a second position wherein said means captured in said aperture disengages from said aperture in said shank portion allowing said blade to be removed from said blade carrier, characterised in that said retaining means comprises a second eccentric groove (92) formed in the inner surface (46') of the clamped member which eccentric groove extends partially about the inner surface of said tubular body and further comprising means (36') attached to said free end of said blade carrier and received within the said second eccentric groove.

2. A reciprocating power saw having a motor for driving a saw blade (26) having a shank portion (24) with an aperture (28) formed therein, the saw comprising:
a blade carrier (10) operatively connected to said motor and having a free end (12), said free end having a slot (22) formed therein along a central longitudinal axis thereof in which said shank portion of said saw blade is received, said free end further having an aperture (30) in its sidewall providing communication between an outer surface of said free end and said slot;
a clamp member (38) having tubular body (40) and a hollow interior (42) in which said free end of said blade carrier is received, said clamp member having a first eccentric groove (76) formed in its inner surface, said clamp member further having an inside diameter corresponding generally to the width (X) of said shank portion of said saw blade and further comprising a shank engaging surface engageable with a part of the shank spaced apart from the aperture, which shank engaging surface is curved;
means for attaching said clamp member to said free end of said blade carrier for rotation about said free end between at least first and second positions;
captured means (34) captured in said aperture in said free end of said blade carrier and in engagement with said first eccentric groove for co-operating with said aperture in said shank portion to secure said blade to said blade carrier when said clamp member is in said first position and release said blade when said clamp member is in said second position;
retaining means co-operable with the blade for retaining the clamp member at said free end and to limit rotation of said clamp member between said first and second positions; and
biasing means (64) attached to said blade carrier and to said clamp member for biasing said clamp member toward a first position wherein said means captured in said aperture is urged into engagement with said aperture in said shank portion of said blade to secure said blade carrier, said clamp member rotatable from said first position to a second position wherein said means captured in said aperture disengages from said aperture in said shank portion allowing said blade to be removed from said blade carrier characterised in that the retaining means comprises a slot (54) extending partially about the circumference of the tubular body and further comprises a stop means (86) attached to said free end of said blade carrier for co-operating with said slot in said tubular body.

3. A saw according to either of the preceding claims, wherein the biasing means comprises torsion spring means attached to said blade carrier and to said clamp member.

4. A saw according to any one of the preceding claims, wherein the tubular body further comprises a pair of notches in one end thereof into which said blade is inserted, said notches being oppositely disposed about the circumference of said tubular body so that said notches are aligned with said slot in said free end of said blade carrier when said clamp member is in said second position.

5. A saw according to any one of the preceding claims, wherein the captured means comprises a ball.

6. A saw according to any one of claims 1 to 4, wherein the captured means comprises a pin member slidably received within said aperture in said free end of said blade carrier and in engagement with said first eccentric groove, said pin member having a first end adapted to be received within the aperture in the shank portion to secure the blade to said blade carrier when said clamp member is in said first position and release the blade once the clamp member is in said second position, said first end of said pin member having a first set spherical segment defined by a first radius of curvature and a second spherical segment defined by a second radius of curvature, said first radius being smaller than said second radius.

7. A saw according to any one of claims 1 to 4, wherein the captured means comprises a pin member slidably received within said aperture in said free end of said blade carrier and in engagement with said first eccentric groove, said pin member having a first end adapted to be received within the aperture of the shank portion to secure the blade to said blade carrier when said clamp member is in said first position and to release the blade when said clamp member is in said second position, said pin member further having a first body portion with an outside diameter substantially equal to the size of said aperture in said blade carrier and the second body portion having an outside diameter less than said outside diameter of said first portion thereby defining a space for accumulated debris to fall away from the interface between said pin member and said aperture of said blade carrier.

## Patentansprüche

1. Hin- und hergehende Maschinensäge mit einem Motor zum Antrieb eines Sägeblatts (26), das einen Schaftteil (24) aufweist, in dem eine Öffnung (28) ausgebildet ist, wobei die Säge folgendes umfaßt:
einen Blattträger (10), der mit dem Motor wirkverbunden ist und ein freies Ende (12) aufweist, wobei in dem freien Ende entlang einer mittleren Längsachse davon ein Schlitz (22) ausgcbildet ist, in dem der Schaftteil des Sägeblatts aufgenommen wird, wobei in der Seitenwand des freien Endes weiterhin eine Öffnung (30) ausgebildet ist, die eine Verbindung zwischen einer Außenfläche des freien Endes und dem Schlitz herstellt,
ein Klemmglied (38) mit einem röhrenförmigen Körper (40) und einem Innenhohlraum (42), in dem das freie Ende des Blattträgers aufgenommen wird, wobei in der Innenfläche des Klemmglieds eine erste exzentrische Nut (76) ausgebildet ist und das Klemmglied weiterhin einen Innendurchmesser aufweist, der allgemein der Breite (X) des Schaftteils des Sägeblatts entspricht und weiterhin eine Schafteingriffsfläche umfaßt, die mit einem von der Öffnung beabstandeten Teil des Schafts in Eingriff gebracht werden kann, wobei die Schafteingriffsfläche gekrümmt ist;
ein Mittel zur Befestigung des Klemmglieds an dem freien Ende des Blattträgers zur Drehung um das freie Ende zwischen mindestens einer ersten und einer zweiten Position;
ein in der Öffnung in dem freien Ende des Blattträgers aufgenommenes und mit der ersten exzentrischen Nut in Eingriff stehendes aufgenommenes Mittel (34) zum Zusammenwirken mit der Öffnung in dem Schaftteil zur Befestigung des Blatts an dem Blattträger, wenn sich das Klemmglied in der ersten Position befindet, und zur Freigabe des Blatts, wenn sich das Klemmglied in der zweiten Position befindet;
ein mit dem Blatt zusammenwirkbares Haltemittel zum Festhalten des Klemmglieds an seinem freien Ende und zur Begrenzung der Drehung des Klemmglieds zwischen der ersten und der zweiten Position; und
ein an dem Blattträger und dem Klemmglied befestigtes Vorspannmittel (64) zum Vorspannen des Klemmglieds in eine erste Position, in der das in der Öffnung aufgenommene Mittel in Eingriff mit der Öffnung in dem Schaftteil des Blattes gedrängt wird, um den Blattträger zu befestigen, wobei das Klemmglied aus der ersten Position in eine zweite Position drehbar ist, in der das in der Öffnung aufgenommene Mittel aus der Öffnung in dem Schaftteil ausrückt und ein Herausziehen des Blattes aus dem Blattträger gestattet, dadurch gekennzeichnet, daß das Haltemittel eine zweite exzentrische Nut (92) umfaßt, die in der Innenfläche (46') des Klemmglieds ausgebildet ist und teilweise um die Innenfläche des röhrenförmigen Körpers herum verläuft, und des weiteren ein Mittel (36') umfaßt, das an dem freien Ende des Blattträgers befestigt und in der zweiten exzentrischen Nut aufgenommen ist.

2. Hin- und hergehende Maschinensäge mit einem Motor zum Antrieb eines Sageblatts (26), das einen Schaftteil (24) aufweist, in dem eine Öffnung (28) ausgebildet ist, wobei die Säge folgendes umfaßt:
einen Blattträger (10), der mit dem Motor wirkverbunden ist und ein freies Ende (12) aufweist, wobei in dem freien Ende entlang einer mittleren Längsachse davon ein Schlitz (22) ausgebildet ist, in dem der Schaftteil des Sägeblatts aufgenommen wird, wobei in der Seitenwand des freien Endes weiterhin eine Öffnung (30) ausgebildet ist, die eine Verbindung zwischen einer Außenfläche des freien Endes und dem Schlitz herstellt;
ein Klemmglied (38) mit einem röhrenförmigen Körper (40) und einem Innenhohlraum (42), in dem das freie Ende des Blattträgers aufgenommen wird, wobei in der Innenfläche des Klemmglieds eine erste exzentrische Nut (76) ausgebildet ist und das Klemmglied weiterhin einen Innendurchmesser aufweist, der allgemein der Breite (X) des Schaftteils des Sägeblatts entspricht und weiterhin eine Schafteingriffsfläche umfaßt, die mit einem von der Öffnung beabstandeten Teil des Schafts in Eingriff gebracht werden kann, wobei die Schafteingriffsfläche gekrümmt ist;
ein Mittel zur Befestigung des Klemmglieds an dem freien Ende des Blattträgers zur Drehung um das freie Ende zwischen mindestens einer ersten und einer zweiten Position;
ein in der Öffnung in dem freien Ende des Blattträgers aufgenommenes und mit der ersten exzentrischen Nut in Eingriff stehendes aufgenommenes Mittel (34) zum Zusammenwirken mit der Öffnung in dem Schaftteil zur Befestigung des Blatts an dem Blattträger, wenn sich das Klemmglied in der ersten Position befindet, und zur Freigabe des Blatts, wenn sich das Klemmglied in der zweiten Position befindet;
ein mit dem Blatt zusammenwirkbares Haltemittel zum Festhalten des Klemmglieds an seinem freien Ende und zur Begrenzung der Drehung des Klemmglieds zwischen der ersten und der zweiten Position; und
ein an dem Blattträger und dem Klemmglied befestigtes Vorspannmittel (64) zum Vorspannen des Klemmglieds in eine erste Position, in der das in der Öffnung aufgenommene Mittel in Eingriff mit der Öffnung in dem Schaftteil des Blattes gedrängt wird, um den Blattträger zu befestigen, wobei das Klemmglied aus der ersten Position in eine zweite Position drehbar ist, in der das in der Öffnung aufgenommene Mittel aus der Öffnung in dem Schaftteii ausrückt und ein Herausziehen des Blattes aus dem Blattträger gestattet, dadurch gekennzeichnet, daß das Haltemittel einen Schlitz (54) umfaßt, der teilweise um den Umfang des röhrenförmigen Körpers herum verläuft, und weiterhin ein an dem freien Ende des Blattträgers befestigtes Anschlagmittel (86) zum Zusammenwirken mit dem Schlitz in dem röhrenförmigen Körper aufweist.

3. Säge nach einem der vorhergehenden Ansprüche, bei der das Vorspannmittel ein an dem Blattträger und dem Klemmglied befestigtes Drehfedermittel umfaßt.

4. Säge nach einem der vorhergehenden Ansprüche, bei der der röhrenförmige Körper weiterhin ein Paar in einem Ende davon ausgebildete Kerben umfaßt, in die das Blatt eingesetzt ist, wobei die Kerben einander gegenüber um den Umfang des röhrenförmigen Körpers herum so angeordnet sind, daß sie auf den Schlitz in dem freien Ende des Blattträgers ausgerichtet sind, wenn sich das Klemmglied in der zweiten Position befindet.

5. Säge nach einem der vorhergehenden Ansprüche, bei der das aufgenommene Mittel eine Kugel umfaßt.

6. Säge nach einem der Ansprüche 1 bis 4, bei der das aufgenommene Mittel ein Stiftglied umfaßt, das in der im freien Ende des Blattträgers ausgebildeten Öffnung gleitend aufgenommen ist und mit der ersten exzentrischen Nut in Eingriff steht, wobei das Stiftglied ein erstes Ende aufweist, das zur Aufnahme in der im Schaftteil ausgebildeten Öffnung zur Befestigung des Blattes an dem Blattträger, wenn sich das Klemmglied in der ersten Position befindet, und zur Freigabe des Blattes, wenn sich das Klemmglied in der zweiten Position befindet, ausgeführt ist, wobei das erste Ende des Stiftglieds ein erstes kugelförmiges Einstellsegment, das durch einen ersten Krümmungsradius definiert ist, und ein zweites kugelförmiges Segment, das durch einen zweiten Krümmungsradius definiert ist, aufweist, wobei der erste Radius kleiner als der zweite Radius ist.

7. Säge nach einem der Ansprüche 1 bis 4, bei der das aufgenommene Mittel ein Stiftglied umfaßt, das in der im freien Ende des Blattträgers ausgebildeten Öffnung gleitend aufgenommen ist und mit der ersten exzentrischcn Nut in Eingriff steht, wobei das Stiftglied ein erstes Ende aufweist, das zur Aufnahme in der im Schaftteil ausgebildeten Öffnung zur Befestigung des Blattes an dem Blattträger, wenn sich das Klemmglied in der ersten Position befindet, und zur Freigabe des Blattes, wenn sich das Klemmglied in der zweiten Position befindet, ausgeführt ist, wobei das Stiftglied weiterhin einen ersten Körperteil, dessen Außendurchmesser im wesentlichen gleich der Größe der Öffnung in dem Blattträger ist, und einen zweiten Körperteil aufweist, dessen Außendurchmesser kleiner als der Außendurchmesser des ersten Teils ist, wodurch ein Raum für angesammelte Abfallteilchen definiert wird, so daß sie von der Grenzfläche zwischen dem Stiftglied und der Öffnung des Blattträgers weg fallen.

## Revendications

1. Scie sauteuse présentant un moteur pour entraîner une lame de scie (26) ayant une partie de queue (24) avec une ouverture (28) formée à l'intérieur, la scie comprenant :
un porte-lame (10) relié de manière fonctionnelle audit moteur et présentant une extrémité libre (12), ladite extrémité libre présentant une encoche (22) formée à l'intérieur le long de son axe longitudinal central et recevant ladite partie de queue de ladite lame de scie, ladite extrémité libre comprenant en outre une ouverture (30) dans sa paroi latérale établissant la communication entre une surface extérieure de ladite extrémité libre et ladite encoche ;
un élément de serrage (38) présentant un corps tubulaire (40) et un intérieur creux (42) recevant ladite extrémité libre dudit porte-lame, ledit élément de serrage présentant une première rainure excentrique (76) formée dans sa surface intérieure, ledit élément de serrage présentant en outre un diamètre intérieur correspondant globalement à la largeur (X) de ladite partie de quèue de ladite lame de scie et comprenant en outre une surface de mise en prise avec la queue pouvant venir en prise avec une partie de la queue espacée de l'ouverture, Ladite surface de mise en prise avec la queue étant incurvée ;
des moyens pour fixer ledit élément de serrage à ladite extrémité libre dudit porte-lame pour permettre la rotation autour de ladite extrémité libre entre au moins une première et une seconde position ;
des moyens emprisonnés (34) dans ladite ouverture de ladite extrémité libre dudit porte-lame et en prise avec ladite première rainure excentrique pour coopérer avec ladite ouverture dans ladite partie de queue pour bloquer ladite lame dans ledit porte-lame lorsque ledit élément de serrage se trouve dans ladite première position et dégager ladite lame lorsque ledit élément de serrage se trouve dans ladite seconde position ;
des moyens de retenue pouvant fonctionner en coopération avec la lame pour retenir l'élément de serrage au niveau de ladite extrémité libre et pour limiter la rotation dudit élément de serrage entre lesdites première et seconde positions ; et
des moyens de déformation (64) fixés audit porte-lame et audit élément de serrage pour amener, par déformation, l'élément de serrage dans une première position dans laquelle lesdits moyens emprisonnés dans ladite ouverture sont contraints de venir en prise avec ladite ouverture dans ladite partie de queue de ladite lame pour bloquer ledit porte-lame, ledit élément de serrage pouvant tourner depuis ladite première position vers une seconde position dans laquelle lesdits moyens emprisonnés dans ladite ouverture se dégagent de ladite ouverture dans ladite partie de queue, permettant ainsi de retirer ladite lame dudit porte-lame, caractérisée en ce que lesdits moyens de retenue comprennent une seconde rainure excentrique (92) formée dans la surface intérieure (46') de l'élément serré dont la rainure excentrique s'étend en partie sur la surface intérieure dudit corps tubulaire et comprenant en outre des moyens (36') fixés à ladite extrémité dudit porte-lame et reçus à l'intérieur de ladite seconde rainure excentrique.

2. Scie sauteuse présentant un moteur pour actionner une lame de scie (26) présentant une partie de queue (24) avec une ouverture (28) formée & l'intérieur, la scie comprenant :
un porte-lame (10) relié de manière fonctionnelle audit moteur et présentant une extrémité libre (12), ladite extrémité libre présentant une encoche (22) formée & l'intérieur le long de son axe longitudinal central et recevant ladite partie de queue de ladite lame de scie, ladite extrémité libre comprenant en outre une ouverture (30) dans sa paroi latérale établissant une communication entre une surface extérieure de ladite extrémité libre et ladite encoche ;
un élément de serrage (38) présentant un corps tubulaire (40) et un intérieur creux (42) recevant ladite extrémité libre dudit porte-lame, ledit élément de serrage présentant une première rainure excentrique (76) formée dans sa surface intérieure, ledit élément de serrage présentant en outre un diamètre intérieur correspondant globalement à la largeur (X) de ladite partie de queue de ladite lame de scie et comprenant en outre une surface de mise en prise avec la queue venant en prise avec une partie de la queue espacée de l'ouverture, dont la surface venant en prise avec la queue est incurvée ;
des moyens pour fixer ledit élément de serrage à ladite extrémité libre dudit porte-lame pour permettre la rotation autour de ladite extrémité libre entre au moins une première et une seconde position ;
des moyens emprisonnés (34) dans ladite ouverture de ladite extrémité libre dudit porte-lame et en prise avec ladite première rainure excentrique pour coopérer avec ladite ouverture de ladite partie de queue afin de bloquer ladite lame dans ledit porte-lame lorsque ledit élément de serrage se trouve dans ladite première position et de dégager ladite lame lorsque ledit élément de serrage se trouve dans ladite seconde position ;
des moyens de retenue pouvant fonctionner en coopération avec la lame pour retenir l'élément de serrage au niveau de ladite extrémité libre et afin de limiter la rotation dudit élément de serrage entre les première et seconde positions : et
des moyens de déformation (64) fixés audit porte-lame et audit élément de serrage pour amener par déformation ledit élément de serrage dans une première position où lesdits moyens emprisonnés dans ]adite ouverture sont contraints de venir en prise avec ladite ouverture dans ladite partie de queue de ladite lame pour bloquer ledit porte-lame, ledit élément de serrage pouvant tourner depuis ladite première position jusqu'à une seconde position dans laquelle lesdits moyens emprisonnés dans ladite ouverture se dégagent de ladite ouverture de ladite partie de queue, permettant ainsi de retirer ladite lame dudit porte-lame, caractérisée en ce que les moyens de retenue comprennent une encoche (54) s'étendant en partie sur la circonférence du corps tubulaire et comprennent en outre des moyens de blocage (86) fixés à ladite extrémité libre dudit porte-lame pour coopérer avec ladite encoche dans ledit corps tubulaire,

3. Scie selon l'une quelconque des revendications précédentes, dans laquelle les moyens de déformation comprennent des moyens formant ressorts de torsion fixés audit porte-lame et audit élément de serrage.

4. Scie selon l'une quelconque des revendications précédentes, dans laquelle le corps tubulaire comprend en outre une paire de crans à une de ses extrémités, dans lesquels est insérée ladite lame, lesdits crans étant disposés de manière opposée sur la circonférence dudit corps tubulaire de telle sorte que lesdits crans soient alignés avec ladite encoche de ladite extrémité libre dudit porte-lame lorsque ledit élément de serrage se trouve dans ladite seconde position.

5. Scie selon l'une quelconque des revendications précédentes, dans laquelle les moyens emprisonnés comprennent une bille.

6. Scie selon l'une quelconque des revendications 1 à 4, dans laquelle les moyens emprisonnés comprennent un élément formant broche reçu de manière coulissante A l'intérieur de ladite ouverture de ladite extrémité dudit porte-lame et en prise avec ladite seconde rainure excentrique, ledit élément formant broche présentant une première extrémité adaptée pour être reçue à l'intérieur de l'ouverture de la partie de queue pour bloquer la lame dans ledit porte-lame lorsque ledit élément de serrage se trouve dans ladite première position et dégager la lame une fois que l'élément de serrage se trouve dans ladite seconde position, ladite première extrémité dudit élément formant broche présentant un premier segment sphérique déterminé défini par un premier rayon de courbure et un second segment sphérique défini par un second rayon de courbure, ledit premier rayon étant inférieur audit second rayon.

7. Scie selon l'une quelconque des revendications 1 à 4, dans laquelle les moyens emprisonnés comprennent un élément formant broche reçu de manière coulissante à l'intérieur de ladite ouverture de ladite extrémité libre dudit porte-lame et en prise avec ladite rainure excentrique, ledit élément formant broche présentant une première extrémité adaptée pour être reçue à l'intérieur de l'ouverture de la partie de queue pour bloquer la lame dans ledit porte-lame lorsque ledit élément de serrage se trouve dans sa première position et dégager la lame lorsque ledit élément de serrage se trouve dans ladite seconde position, ledit élément formant broche présentant en outre une première partie de corps avec un diamètre extérieur sensiblement égal à la taille de ladite ouverture dudit porte-lame et la seconde partie de corps ayant un diamètre extérieur inférieur audit diamètre extérieur de ladite première partie, définissant ainsi un espace pour permettre à des débris accumulés de tomber à l'extérieur depuis l'interface située entre ledit élément formant broche et ladite ouverture dudit porte-lame.
